# FASCICULE DE BREVET EUROPEEN

(11) **EP 0 582 516 B1**
(45) Date de publication et mention de la délivrance du brevet: **07.01.1998**
(21) Numéro de dépôt: 93401999.3
(22) Date de dépôt: 03.08.1993
(51) Int. Cl.: H02P 7/638

(54) **Système de régulation électronique de vitesse d'un moteur**
Elektronische Drehzahlregelungsanordnung eines Motors
Electronic speed control system of a motor

(30) Priorité: 04.08.1992 FR 9209652
(43) Date de publication de la demande: 09.02.1994
(73) Titulaire: ESSWEIN S.A., F-85002 La Roche-sur-Yon (FR)
(72) Inventeur: Soulard, Antoine, F-92402 Courbevoie Cédex (FR)
(74) Mandataire: Chaverneff, Vladimir

(56) Documents cités:
- PATENT ABSTRACTS OF JAPAN vol. 10, no. 125 (E-402)(2182) 10 Mai 1986; & JP-A-60 255 058
- MOTOROLA TECHNICAL DEVELOPMENTS, vol. 2, janvier 1982, Schaumburg IL, US, pp. 40-41; T.L. HOPKINS : 'AC freewheeling diodes'
- SIEMENS COMPONENTS, vol. 18, no. 6, décembre 1983, Munich DE, pp. 229-234; R. KNAUER : 'SFH900 - A low-cost miniature reflex optical sensor'
- PATENT ABSTRACTS OF JAPAN vol. 15, no. 148 (E-1056) 15 Avril 1991; & JP-A-30 22 866

## Description

La présente invention concerne un système de régulation de vitesse à courant continu d'un moteur de puissance, notamment de moteur universel, équipant des machines domestiques.

Un moteur est dit universel quand il peut fonctionner à la fois en alimentation continue et en alimentation alternative. n est constitué d'un stator couplé électromagnétiquement à un rotor. Pour réaliser ce couplage, le stator et le rotor sont tous les deux munis d'un bobinage et alimentés en tension. Afin de transmettre le courant au rotor, celui-ci est muni d'un système de balai (deux en général) et de collecteurs (quelques dizaines).

Lorsque le moteur est alimenté par une tension sinusoïdale, celle-ci dans le rotor est redressée et est pratiquement continue. Le champ variant créé par le bobinage du stator va donc entraîner en rotation le pseudo-aimant permanent qu'est le rotor. Inversement, lorsque le stator (alors aimant fictif) est alimenté en continu, la tension parcourant la bobine est sinusoïdale et le rotor est entraîné en rotation.

Ce type de moteur est très utilisé car, contrairement à d'autres moteurs de mêmes applications, comme les moteurs synchrones ou asynchrones, sa vitesse varie en fonction de sa tension d'alimentation.

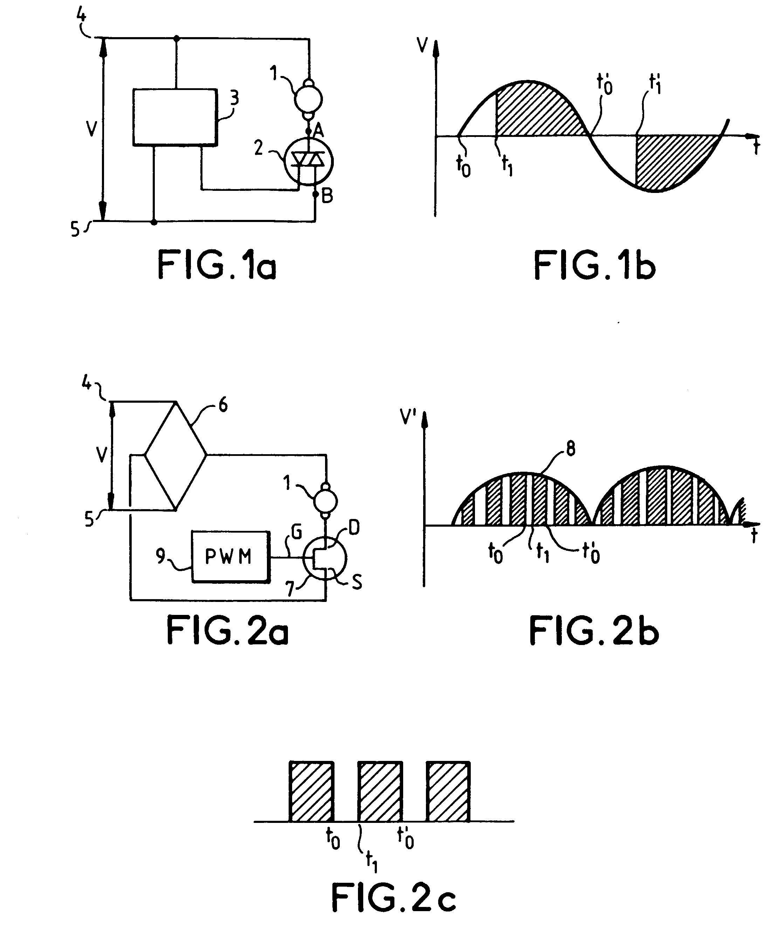

Les moteurs universels sont en général alimentés par une tension alternative sinusoïdale (type secteur) et sont commandés par un triac piloté en angle de phase. Le stator et le rotor sont tous les deux montés en série. Le fonctionnement du triac est décrit ci-dessous en se référant aux figures 1a et 1b.

Sur la figure 1a, le moteur 1 est branché aux bornes 4 et 5 d'une alimentation délivrant une tension alternative sinusoïdale V par l'intermédiaire d'un triac 2. Une carte de commande 3 est branchée aux bornes 4 et 5 de l'alimentation.

Cette carte commande le triac 2 qui, lui-même, commande l'alimentation du moteur. L'alimentation délivre au circuit une tension dont le diagramme de l'amplitude en fonction du temps est représenté sur la figure 1b. A to, le triac 2 n'est pas commandé et se comporte comme un interrupteur ouvert, il n'y a pas de courant entre les bornes A et B du triac 2. A t1, la gachette du triac 2 reçoit de la carte de commande 3 une impulsion qui autorise le passage du courant entre les bornes A et B du triac 2. Le moteur 1 est alors alimenté. De nouveau, à to', lorsque le courant traversant le triac 2 s'annule, le moteur 1 n'est plus alimenté jusqu'à t'l où la carte de commande 3 autorise le courant à passer entre les bornes A et B. L'alimentation du moteur universel s'effectue ainsi de suite.

La vitesse du moteur obtenue est une fonction de l'angle de phase de l'alimentation. Ainsi, si t1 = to, alors la vitesse obtenue est la vitesse maximale. En revanche, si t1 est très légèrement inférieur à t'o, la vitesse obtenue est minimale.

Une telle commande de l'alimentation du moteur universel présente de nombreux inconvénients, notamment celui de l'échauffement important des balais et la nécessité d'utiliser des balais résistants à l'usure due à ces échauffements (dit balais sandwich) générateurs de bruit et des guides laiton résistant à ces températures. Le stator supporte lui aussi des échauffements importants car le rendement d'un moteur universel en alternatif n'est pas optimal. D'autre part, la fiabilité du moteur est diminuée du fait de sa sévère condition d'utilisation et l'alimentation du moteur par une source alternative de 50 Hz conduit à une onde de courant et à une onde de couple de 100 Hz fortement génératrice de bruits. La nuisance sonore augmente avec la vitesse du moteur, ceci étant dû notamment au frottement du balai sur le rotor.

On connaît d'après le document "MOTOROLA Technical Developments", Vol. 2, Janvier 1982, page 41, un circuit PWM pour une charge inductive, destiné à absorber l'énergie inductive de cette charge.

La présente invention propose, pour remédier à ces inconvénients, un système de régulation selon la revendication 1.

Ce système permet de réduire les échauffements des balais et donc de remplacer les balais sandwich par des balais monoblocs et de supprimer les guides de laiton. Ce changement de balais et ces suppressions entraînent une forte réduction des nuisances acoustiques et du coût de l'ensemble balais/porte-balais.

Les échauffements du stator diminuent par rapport à l'art antérieur et le rendement est donc meilleur.

Ces réductions des échauffements augmentent la fiabilité du moteur.

La présente invention sera mieux comprise et les avantages supplémentaires apparaîtront à la lecture de la description qui va suivre, illustrée par les figures suivantes :
- les figures 1a et 1b, déjà décrites, représentent un dispositif de commande d'un moteur universel selon l'art antérieur;
- les figures 2a et 2b représentent un système de commande d'un moteur universel selon la présente invention ;
- la figure 3 représente un système de commande d'un moteur universel selon un mode particulier de réalisation de la présente invention.

Sur la figure 2a, le moteur universel est branché en parallèle sur un dispositif redresseur 6 (type pont à diodes) qui délivre une tension sinusoïdale redressée double alternance dont la forme et l'amplitude sont représentées sur la figure 2b par le trait 8. Cette tension redressée peut être filtrée en amont et/ou en aval par une capacité de filtrage.

L'alimentation du moteur 1 est commandée par un dispositif de commutation 7 dont l'état passant ou non-passant est lui-même commandé par un dispositif modulateur de largeur d'impulsions PWM 9. Le dispositif de commutation 7 est avantageusement un transistor de puissance dont la grille est connectée au dispositif modulateur de largeur d'impulsions 9 qui délivre un signal carré d'une fréquence F supérieure à celle de la tension délivrée par le dispositif redresseur 6. Le transistor 7 va donc s'ouvrir et se fermer à la fréquence du modulateur 9, celui-ci imposant la durée de fermeture et d'ouverture du transistor 7.

La figure 2b montre la tension V' finalement reçu par le moteur 1. L'amplitude de la tension est donnée par le redresseur 6 et la découpe régulière de cette tension est imposée par le modulateur 9. A to la grille G du transistor 7 n'est pas polarisée et le moteur n'est pas alimenté. A t1, le modulateur 9 polarise la grille G, le courant passe entre le drain D et la source S du transistor 7 et le moteur est alimenté jusqu'à t'o = to + T (T étant la période correspondant à la fréquence F) où le transistor est de nouveau non-passant et le moteur non-alimenté. La tension délivrée par le redresseur 6 est ainsi de suite découpée. Si la tension est à 50Hz, elle sera découpée de cette manière afin d'obtenir une fréquence inaudible à l'oreille humaine, c'est à dire typiquement une fréquence supérieure à environ 10KHz.

Afin d'obtenir ce résultat, le train d'impulsion généré par le modulateur 9 et appliqué à la grille G du transistor 7, a une fréquence inaudible de, par exemple, F = 18 KHz représenté par la figure 2c. De to à t1, la grille n'est pas polarisée et le transistor est non-passant, de t1 à t'o = to + T, la grille est polarisée, le transistor passant et le moteur alimenté.

La vitesse du moteur obtenue est fonction de la largeur de l'impulsion (t'o - t1).

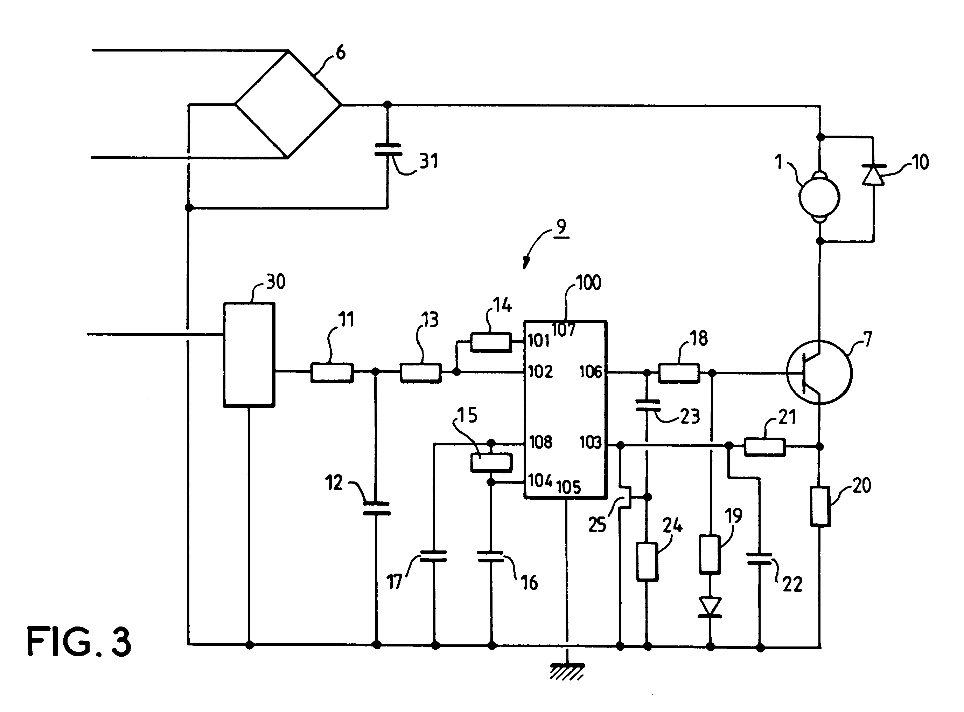

Sur la figure 3, une diode 10, est avantageusement montée en parallèle au moteur afin de créer un chemin de rebouclage pour le courant du moteur permettant, lorsque le transistor n'est plus passant, de décharger la self équivalente du moteur.

D'autre part, on peut brancher en parallèle aux pôles du pont redresseur 6 une capacité de découplage 31 des selfs de fileries rejoignant le moteur qui limitent la tension. Cette capacité est, par exemple, à une tension maximale de 320 V et de quelques centaines de NF (nanoFarad).

Le circuit modulateur de largeur d'impulsion PWM commandant le dispositif de commutation 7 peut être un micro-processeur, un circuit logique ou analogique.

Un signal de fréquence par exemple 1KHz et de rapport cyclique variable est appliqué à un circuit de mise en forme de signal 30 du type trigger de SCHMITT afin de produire à sa sortie un signal carré de bonne qualité dont le rapport cyclique est variable.

Le réseau composé de la résistance 11 (quelques centaines de KΩ) et la capacité 12 (quelques dizaines de µF) sert à filtrer cette onde pour que l'on obtienne au travers de la résistance 13 (quelques dizaines de KΩ) une onde parfaitement continue. On a ainsi une onde continue à l'entrée du circuit intégré 100. Dans ce mode de réalisation, ce circuit peut être un 38.42 fonctionnant en mode courant, c'est-à-dire qu'à tout instant il va lire le courant qui traverse le dispositif de commutation 7 et en fonction de celui-ci il va corriger le rapport cyclique qui a été donné par la consigne. Celle-ci va être transmise directement au travers des résistances 13 et 14 (quelques de dizaines de KΩ) aux broches 101 et 102 du circuit 100.

Le réseau composé de la résistance 15 et de la capacité 16 branché aux broches 108 et 104 du circuit donnent la fréquence d'oscillation. Pour réaliser un oscillateur centré sur 17 KHz (un exemple de fréquence inaudible) les valeurs de la résistances 15 et de la capacité 16 sont de l'ordre de 70 kΩ et du nF. Aux bornes de ce réseau est branché une capacité 17 de l'ordre du µF qui est une capacité d'antiparisitage et de découplage.

Ce réseau doit fournir un signal en dents de scie au circuit 100. Au zéro de ce signal, la broche 106 va, au travers du réseau composé des résistances 18 (quelques dizaines d'Ω) et 19 (quelques dizaines d'Ω), va polariser (à 18 Volts pour le 38.42) la grille du transistor 7, une onde de courant va donc passer au travers de la résistance 20 (de l'ordre du dizième d'Ω) et va être lue par la broche 103 du circuit 100. Dès que la tension aux bornes de cette résistance 20 a atteint la valeur de consigne que l'on a présenté aux broches 101 et 102, le circuit 100 décharge par la broche 108 la grille du transistor 7 qui devient non passant.

Le réseau composé de la résistance 21 (qui est de l'ordre de la centaine d'Ω) et de la capacité 22 (plusieurs dizaines de nF) filtre les parasites et le circuit composé de la capacité 23 (quelques nF), la résistance 24 (quelques dizaines de KΩ) et le dispositif de commutation 25 (du type BSS 92 par exemple) va décharger la capacité 22 dès que le transistor 7 devient non passant.

Les broches 107 et 105 sont les contacts d'alimentation (non représentée sur la figure) du circuit 100.

La présente invention s'applique à la régulation de la vitesse de moteurs universels utilisés en particulier dans tous les types de machines dont la nuisance sonore doit être réduite, comme par exemple dans les machines à laver, les aspirateurs ou les ventilateurs.

## Revendications

1. Système de régulation comprenant un moteur universel (1) équipé de balais monoblocs, un dispositif de commutation (7), un modulateur de largeur d'impulsion (9) et un redresseur (6) à un pôle duquel est connecté le circuit série dudit moteur et dudit dispositif de commutation dont l'état passant est commandé par ledit modulateur de largeur d'impulsion afin de délivrer audit moteur un signal d'alimentation découpé à une fréquence supérieure à 10 kHz, inaudible à l'oreille humaine.

2. Système de régulation d'un moteur universel selon la revendication 1, caractérisé en ce qu'une diode (10) est branchée aux bornes du moteur universel (1).

3. Système de régulation d'un moteur universel selon l'une quelconque des revendications précédentes, caractérisé en ce qu'une capacité de découplage de quelques centaines de nanoFarad est branchée en parallèle au pôle du dispositif redresseur de tension (6).

4. Système de régulation d'un moteur universel selon l'une quelconque des revendications précédentes, caractérisé en ce qu'une capacité de filtrage est branchée en parallèle au pôle du dispositif redresseur (6).

5. Système de régulation d'un moteur universel selon l'une quelconque des revendications précédentes, caractérisé en ce que le modulateur de largeur d'impulsion (9) est un microprocesseur, un circuit logique ou analogique fonctionnant en mode courant ou pas.

6. Système de régulation d'un moteur universel selon l'une quelconque des revendications précédentes, caractérisé en ce que le dispositif de commutation (7) est un transistor de puissance.

7. Système de régulation d'un moteur universel selon l'une quelconque des revendications précédentes, caractérisé en ce que le modulateur de largeur d'impulsion est constitué par un circuit intégré fonctionnant en mode courant commandant le dispositif de commutation à une fréquence inaudible, qui mesure le courant passant dans le dispositif de commutation (7), le compare à une valeur de consigne donnée par un signal de rapport cyclique variable et rend passant le dispositif de commutation (7), dès que cette valeur de consigne est atteinte.

## Patentansprüche

1. Regelsystem mit einem Universalmotor (1), der mit Monoblockbürsten ausgestattet ist, einer Schaltvorrichtung (7), einem Pulsdauermodulator (9) und einem Gleichrichter (6), an dessen einen Pol die Serienschaltung des Motors und der Schaltvorrichtung angeschlossen ist, wobei der Durchlaßzustand der Schaltvorrichtung von dem Pulsdauermodulator derart gesteuert wird, daß sie dem Motor ein Versorgungssignal liefert, das mit einer für das menschliche Ohr unhörbaren Frequenz über 10 kHz zerhackt ist.

2. Regelsystem für einen Universalmotor nach Anspruch 1, dadurch gekennzeichnet, daß eine Diode (10) im Nebenschluß an die Klemmen des Universalmotors (1) angeschlossen ist.

3. Regelsystem für einen Universalmotor nach einem der vorhergehenden Ansprüche, dadurch gekennzeichnet, daß eine Entkopplungskapazität von einigen hundert Nanofarad parallel an den Pol der Spannungsgleichrichtervorrichtung (6) angeschlossen ist.

4. Regelsystem für einen Universalmotor nach einem der vorhergehenden Ansprüche, dadurch gekennzeichnet, daß eine Filterkapazität parallel an den Pol der Gleichrichtervorrichtung (6) angeschlossen ist.

5. Regelsystem für einen Universalmotor nach einem der vorhergehenden Ansprüche, dadurch gekennzeichnet, daß der Pulsdauermodulator (9) ein Mikroprozessor, eine Logikschaltung oder eine Analogschaltung ist, die im Strombetrieb arbeitet oder nicht.

6. Regelsystem für einen Universalmotor nach einem der vorhergehenden Ansprüche, dadurch gekennzeichnet, daß die Schaltvorrichtung (7) ein Leistungstransistor ist.

7. Regelsystem für einen Universalmotor nach einem der vorhergehenden Ansprüche, dadurch gekennzeichnet, daß der Pulsdauermodulator durch eine im Strombetrieb arbeitende, die Schaltvorrichtung mit einer unhörbaren Frequenz steuernde integrierte Schaltung gebildet ist, die den in die Schaltvorrichtung fließenden Strom mißt, ihn mit einem Sollwert vergleicht, der durch ein Signal mit zyklisch veränderlichem Verhältnis gegeben ist, und die Schaltvorrichtung (7) durchlässig macht, sobald dieser Sollwert erreicht ist.

## Claims

1. Control system comprising a universal motor (1) fitted with one-piece brushes, a switching device (7), a pulse width modulator (9) and a rectifier (6) having a single pole to which the series circuit of the said motor and of the said switching device is connected, the on state of which is controlled by the said pulse width modulator so as to deliver a supply signal to the said motor, the said supply signal being chopped at a frequency greater than 10 kHz, inaudible to the human ear.

2. Control system for a universal motor according to Claim 1, characterized in that a diode (10) is connected to the terminals of the universal motor (1).

3. Control system for a universal motor according to either of the preceding claims, characterized in that a decoupling capacitor of a few hundred nanofarads is connected in parallel with the pole of the voltage rectifier device (6).

4. Control system for a universal motor according to any one of the preceding claims, characterized in that a filtering capacitor is connected in parallel with the pole of the rectifier device.

5. Control system for a universal motor according to any one of the preceding claims, characterized in that the pulse width modulator (9) is a microprocessor, a logic or analogue circuit operating in current mode or not.

6. Control system for a universal motor according to any one of the preceding claims, characterized in that the switching device (7) is a power transistor.

7. Control system for a universal motor according to any one of the preceding claims, characterized in that the pulse width modulator consists of an integrated circuit which operates in current mode, controlling the switching device running at an inaudible frequency, and which measures the current flowing through the switching device (7), compares it with a set value given by a signal having a variable duty cycle and turns on the switching device (7) as soon as this set value is reached.
